# EUROPEAN PATENT APPLICATION

(11) **EP 4 549 031 A1**
(43) Date of publication of application: **07.05.2025**
(21) Application number: 23855156.8
(22) Date of filing: 17.08.2023
(51) Int. Cl.: B05C 5/02, B05C 11/02, B05D 1/26

(54) **SLOT DIE COATER CAPABLE OF AUTOMATICALLY CONTROLLING POSITION OF SHIM PLATE AND METHOD FOR CONTROLLING POSITION OF SHIM PLATE OF SLOT DIE COATER**

(30) Priority: 17.08.2022 KR 20220102619
(71) Applicant: LG Energy Solution, Ltd., Seoul 07335 (KR)
(72) Inventor: LEE, Byeongwon, Daejeon 34122 (KR); CHOI, Hojun, Daejeon 34122 (KR); KWON, Sung Sang, Daejeon 34122 (KR); CHO, Daehee, Daejeon 34122 (KR); LEE, Gyusun, Daejeon 34122 (KR)
(74) Representative: Plasseraud IP
(86) International application number: PCT/KR2023/012144
(87) International publication number: WO 2024/039190

(57) **Abstract**

A slot die coater for automatically adjusting a position of a shim plate includes: a slot die; at least one motor disposed inside the slot die; the shim plate disposed on the slot die; and at least one pin penetrating the shim plate and is connected to the motor, and is movable by the motor.

## Description

### [Technical Field]

The present application claims the benefit of and priority to Korean Patent Application No. 10-2022-0102619, filed August 17, 2022, the content of which is incorporated herein by reference in its entirety.

The present invention relates to a slot die coater capable of adjusting a position of a shim plate and a method for adjusting a position of a shim plate of a slot die coater, and more particularly, to a slot die coater capable of automatically adjusting the position of the shim plate and a method for automatically adjusting the position of the shim plate based on information measured by a vision system.

### [Related Art]

In recent years, as energy prices have risen due to the depletion of fossil fuels and environmental pollution has increased, there has been a growing need for alternative, environmentally friendly energy sources. As a result, various power generation technologies such as nuclear, wind, tidal, and solar power are being researched, and there is a growing interest in power storage to use the generated energy more efficiently.

In particular, as technology development and demand for mobile devices increase, the demand for batteries as an energy source is rapidly increasing, and research is being conducted on secondary batteries that can meet various needs.

A secondary battery may include a positive electrode, a negative electrode, and a separator. The positive electrode and negative electrode may be coated with a positive electrode active material and a negative electrode active material, respectively, on the positive electrode collector and the negative electrode collector. In this case, a slot die coater may be used to coat the positive electrode active material and the negative electrode active material.

The slot die coater is capable of coating the positive electrode active material and the negative electrode active material while maintaining a constant coating width. In order to maintain a constant coating width, the shim plate of the slot die coater must be precisely adjusted within the slot die coater.

However, the conventional method of adjusting the position of the shim plate by manually adjusting the shim bracket has the limitation that it is difficult to adjust the position of the shim plate precisely, and the disadvantage that time and labor costs are incurred because direct manpower is required to adjust the position of the shim plate.

Therefore, to overcome these limitations and disadvantages, research is being conducted on techniques to automatically adjust the position of the shim plate.

### [Detailed Description of the Invention]

### [Technical Problems]

It is an objective of the present invention to provide a slot die coater that automatically adjusts the position of a shim plate.

Another objective of the present invention is to provide a method for automatically adjusting the position of a shim plate.

However, the objectives addressed by the present invention are not limited to those described above, and other objects not mentioned will be apparent to those skilled in the art from the following description of the invention.

### [Technical Solutions]

To accomplish the above objectives of the present invention, a slot die coater according to an embodiment of the present invention may include: a slot die; at least one motor disposed inside the slot die; a shim plate disposed on the slot die; and at least one pin penetrating the shim plate and is connected to the motor, and is moveable by the motor.

In an embodiment, the pin may be movable in a first direction, which is a direction in which a coating solution is applied, and in a second direction opposite to the first direction.

In an embodiment, the pin may be movable in a third direction, which is a direction in which the pin penetrates the shim plate, and in a fourth direction opposite the third direction.

In an embodiment, the pin may be movable in a fifth direction, which is perpendicular to the first direction and the third direction, and in a sixth direction opposite the fifth direction.

In an embodiment, the motor may adjust the position of the shim plate by moving the pin when a distance between an end of the shim plate and an end of the slot die measured by a vision system is outside a predetermined tolerance range.

In an embodiment, the motor may be provided in plural and the pin may be provided in plural.

In order to achieve the above-mentioned objectives of the present invention, a method for adjusting a position of a shim plate according to an embodiment of the present invention may include the steps of: measuring a distance between an end of a slot die and an end of the shim plate disposed on the slot die; determining whether the distance is within a predetermined tolerance range; and adjusting a position of the shim plate in accordance with a result of the determination.

In an embodiment, the step of adjusting the position of the shim plate may be performed by the pin that penetrates the shim plate and is connected to motor disposed within the slot die.

In an embodiment, the method may further include: after the step of adjusting the position of the shim plate, a step of securing the shim plate.

In an embodiment, the step of securing the shim plate may be performed by the pin that penetrates the shim plate and is connected to the motor disposed within the slot die.

In an embodiment, the method may further include: after the step of adjusting the position of the shim plate, a step of re-measuring a distance between the end of the shim plate and the end of the slot die.

In an embodiment, the method may further include: after the step of remeasuring, a step of generating an alarm if the distance between the end of the shim plate and the end of the slot die is outside the predetermined tolerance range.

### [Advantageous Effects]

According to the present invention, a position of a shim plate disposed on a slot die may be automatically adjusted by the pin that penetrates the shim plate and is connected with the slot die. The pin is connected to the motor disposed within the slot die, and the motor may adjust the distance between the shim plate and the slot die by adjusting the position of the pin based on information measured by a vision system. In this way, the present invention can uniformly coat a coating solution on a substrate. In addition, since the position of the shim plate is automatically adjusted through the vision system and the motor, there is no need for additional manpower, which saves cost and time, and the position of the shim plate can be precisely adjusted through the motor and the pin.

### [Brief Description of Drawings]

FIGS. 1a through 1c are drawings illustrating a slot die coater according to an embodiment of the present invention.
FIG. 2 is a plan view illustrating an embodiment of a shim plate included in the slot die coater of FIG. 1a.
FIGS. 3a through 3c are drawings illustrating an embodiment of adjusting the position of a shim plate included in the slot die coater of FIG. 1a.
FIGS. 4a and 4b are drawings illustrating an embodiment of adjusting the position of a shim plate included in the slot die coater of FIG. 1a.
FIGS. 5a through 5c are drawings illustrating an embodiment of adjusting the position of a shim plate included in the slot die coater of FIG. 1a.

### [Best Mode for Practicing the Invention]

Hereinafter, preferred embodiments of the present invention will be described in detail with reference to the accompanying drawings. It should be noted that the terms and words used in this specification and claims are not to be construed in their ordinary or dictionary sense, but rather in a sense and concept consistent with the technical idea of the present invention, based on the principle that the inventor may properly define the concept of a term to best describe his invention. Accordingly, it is to be understood that the embodiments described in the specification and the configurations illustrated in the drawings are only some of the most preferred embodiments of the present invention, and are not exhaustive of the technical ideas of the present invention, and that there may be various equivalents and modifications that may replace them at the time of filing.

The slot die coater of the present invention is an apparatus having a slot and applying a coating solution on a substrate through the slot. The slot die coater may be provided with a first slot die and a second slot die. The "substrate" described herein is a collector, and the "coating solution" is an "electrode active material slurry". However, the scope of the present invention is not limited thereto. For example, the substrate may be a porous support comprising a separator, and the coating solution may be an organic material. In other words, the substrate and coating solution may be any material as long as a thin film coating is desired.

In this specification, the first direction DR1 is defined as a direction in which the coating solution is discharged, the second direction DR2 is defined as a direction opposite to the first direction DR1, the third direction DR3 and the fourth direction DR4 are defined as directions perpendicular to the first direction DR1 and the second direction DR2, respectively, and the fifth direction DR5 and the sixth direction DR6 are defined as directions perpendicular to the first direction DR1 and the third direction DR3, respectively.

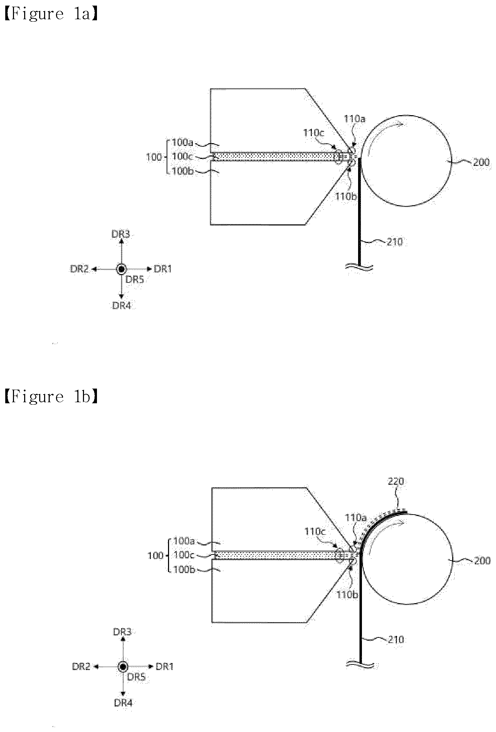

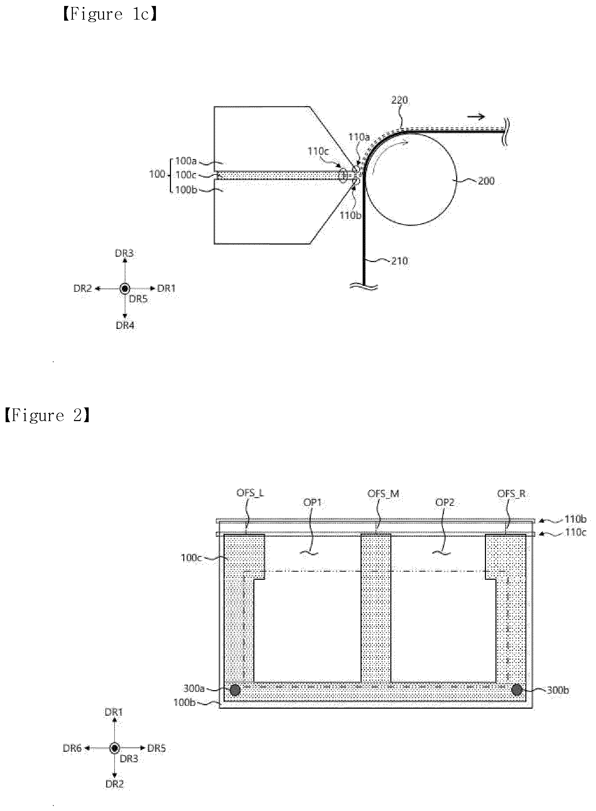

FIGS. 1a through 1c are drawings illustrating a slot die coater according to an embodiment of the present invention.

Referring to FIGS. 1a through 1c, a slot die coater 100 according to an embodiment of the present invention may include a first slot die 100a, a second slot die 100b, and a shim plate 100c. The slot die coater 100 may apply a coating solution 220 to the substrate 210. Accordingly, the substrate 210 may be coated with the coating solution 220. A coating roll 200 may transport the substrate 210. The coating roll 200 may be disposed in front of the slot die coater 100, and the coating roll 200 may be rotated to transfer the substrate 210. As the coating roll 200 drives the substrate 210, the discharged coating solution 220 may be uniformly coated on the substrate 210. To accomplish this, the coating roll 200 may be rotated at a constant speed. In addition, the slot die coater 100 may dispense the coating solution 220 so as to have a constant spread width and discharge the coating solution 220 at a constant speed.

Although not shown, at least one of the first slot die 100a and the second slot die 100b may be provided with a storage space for storing the coating solution 220, and the storage space may be supplied with the coating solution 220 via a passageway connected from the outside.

A shim plate 100c has a first region incised to provide an opening, and may be disposed between a first slot die 100a and a second slot die 100b facing each other. The opening may be located between the first die lip 110a and the second die lip 110b. The shim plate 100c is preferably made of a material having a sealing property so as to function as a gasket to prevent the coating solution 220 from leaking into the gap between the first slot die 100a and the second slot die 100b, except for the area where the opening is formed.

The width of the opening in the shim plate 100c may determine the width over which the coating solution 220 is applied. Multiple openings may be provided, thereby allowing a plurality of coating layers spaced apart from each other to be formed on the substrate 21.

The result of coating by the slot die coater 100 may be affected by various factors. For example, the coating results may be affected by the degree of alignment of the first die lip 110a, which corresponds to an end of the first slot die 100a, and the second die lip 110b, which corresponds to an end of the second slot die 100b. Alternatively, the coating result may vary depending on the distance between the first and second die lips 110a, 110b and the shim end 110c, which is the end of the shim plate 100c.

If the distance between the first and second die lips 110a, 110b and the shim end 110c becomes too large, the spreading width of the coating solution 220 may become large when the coating solution 220 is applied, and the coating solution 220 may not be uniformly applied on the substrate 210. Therefore, to adjust the distance between the first and second die lips 110a, 110b and the shim end 110c, the slot die coater 100 may further include a motor and a pin. The motor may move a pin connected to the motor to move or hold the shim plate 100c. These motor and pin will be described with reference to the following drawings.

FIG. 2 is a plan view illustrating an embodiment of a shim plate included in the slot die coater of FIG. 1a.

Referring to FIGS. 1a and 2, the shim plate 100c may include two openings OP1 and OP2. The first opening OP1 and the second opening OP2 may each be defined as a space for discharging the coating solution 220. In other words, the coating solution 220 stored within the slot die coater 100 may be discharged through the first opening OP1 and the second opening OP2, respectively. However, this is exemplary and the shim plate 100c may include one or more openings.

As described above, the distance between the shim end 110c and the second die lip 110b may vary the coating result. Therefore, the slot die coater 100 according to an embodiment of the present invention may establish a tolerance range for the distance between the shim end 110c and the second die lip 110b, and may adjust the position of the shim plate 100c such that the distance between the shim end 110c and the second die lip 110b is within a predetermined tolerance range. The position of the shim plate 100c may be adjusted before the first slot die 100a and the second slot die 100b are joined with the shim plate 100c therebetween.

Whether the distance between the shim end 110c and the second die lip 110b is within the tolerance range can be determined by various criteria. For example, the distance between the shim end 110c and the second die lip 110b may be measured at three locations on the left, center, and right side of the plane, and then compared to determine whether each of the measured distances falls within a respective predetermined tolerance range. However, this is exemplary, and it is also possible to determine whether the distance between the shim end 110c and the second die lip 110b falls within the predetermined tolerance range based on only the two left and right locations.

The respective tolerances may be determined based on a target value and a finished adjustment value. The target value may be defined as an ideal distance between the shim end 110c and the second die lip 110b. The ideal distance may refer to the distance between the shim end 110c and the second die lip 110b for the coating solution to be applied normally. For example, regarding the left side of the shim plate 100c, the left offset distance OFS_L, which is the shortest distance between the left portion of the shim end 110c and the second die lip 110b, may have a target value of 500 µm. The target value may be determined by considering various factors. For example, the target value may be determined based on quality measurement results such as coating width, mismatch, sliding, fat edge, etc.

The finished adjustment value of the left offset distance OFS_L may correspond to a maximum value of the difference between the target value for determining that the shim plate 100c is in the desired position and the measured value of the vision system. For example, the finished adjustment value may be 80 µm, and if the left offset distance OFS_L measured by the vision system is between 420 and 580 µm, the shim plate 100c may be determined to be in the desired position. In other words, the tolerance range for the left offset distance OFS_L may be between 420 and 580 µm.

The target value can be in a various range of values, and can have a target upper limit and a target lower limit. For example, the target value may be 500 µm, the target upper limit may be 900 µm, and the target lower limit may be 100 µm.

The target value and finished adjustment value described above are exemplary, and the target value and finished adjustment value can be set to various values. In addition, the target upper limit and target lower limit can be set to different values.

Also, while the description of the above values is based on the left offset distance OFS_L, the description of the above values can be equally applied to the right offset distance OFS_R and the middle offset distance OFS_M.

However, if the difference between the maximum and minimum values of the left offset distance OFS_L, the right offset distance OFS_R, and the middle offset distance OFS_M becomes larger than a preset value, the shim plate 100c may warp, causing the slot die coater 100 to malfunction and degrade in performance. Therefore, it is desirable that the difference between the maximum value and the minimum value of the left offset distance OFS_L, the right offset distance OFS_R, and the middle offset distance OFS_M is maintained below a preset value, and the preset value may be defined as a preset limit value. The preset limit value may be 120 µm. For example, if the difference between the left offset distance OFS_L and the right offset distance OFS_R exceeds 120 µm, the position of the shim plate 100c can be adjusted again. Since the preset limit value corresponds to the limit value that can be used without causing deformation of the shim plate 100c, it can be determined differently depending on the size or material of the shim plate 100c.

In order for the distance between the shim end 110c and the second die lip 110b to be within a predetermined tolerance range, the first and second pins 300a, 300b may be moved in a first direction DR1 and a second direction DR2 opposite the first direction DR1. Each of the first pin 300a and the second pin 300b may penetrate the shim plate 100c and connect with the second slot die 100b. The second slot die 100b may be provided with passageways for the first pin 300a and second pin 300b to move. As shown in FIG. 2, one pin may be used to move the shim plate 100c, and three or more pins may be used. However, for ease of explanation, the description will be based on an embodiment in which two pins 300a, 300b are used to move the shim plate 100c.

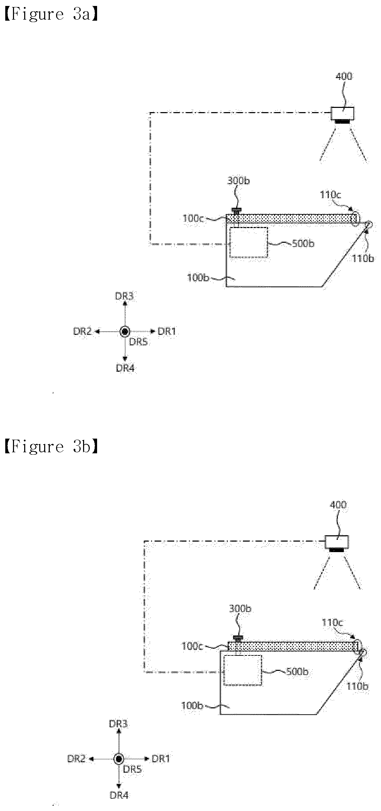

FIGS. 3a through 3c are drawings illustrating an embodiment of adjusting the position of the shim plate included in the slot die coater of FIG. 1a.

Referring to FIG. 3a, the vision system 400 may measure the distance between the shim end 110c and the second die lip 110b. The vision system 400 may be a camera. The distance measured by the vision system 400 may be managed via a control unit (not shown). If the measured distance is outside a predetermined tolerance range, the second motor 500b may move the second pin 300b. Here, the second motor 500b may move the second pin 300b in one of the first to sixth directions DR1-6. Alternatively, the second motor 500b may comprise a plurality of sub-motors, each of which may move the second pin 300b in a different direction. For example, the second motor 500b may include first to third submotors, wherein the first submotor may move the second pin 300b in the first direction DR1 and the second direction DR2, the second submotor may move the second pin 300b in the third direction DR3 and the fourth direction DR4, and the third submotor may move the second pin 300b in the fifth direction DR5 and the sixth direction DR6.

In this case, the second motor 500b may move the second pin 300b in increments of 100 µm. More preferably, the second motor 500b may move the second pin 300b in increments of 100 µm or less. For example, the second motor 500b may move the second pin 300b in increments of 50 µm or 10 µm. However, this is exemplary, and the second motor 200b may move the second pin 300b in increments of 100 µm or more. Accordingly, the shim plate 100c may also be moved in increments of 100 µm or more or less.

Referring to FIGS. 3a and 3b, the shim plate 100c can be moved in the first direction DR1 by the second motor 500b and the second pin 300b, thereby allowing the distance between the shim end 110c and the second die lip 110b to fall within a preset tolerance range.

After the position of the shim plate 100c is adjusted by the second motor 500b and the second pin 300b, it can be checked again whether the distance between the shim end 110c and the second die lip 110b falls within the preset tolerance range. If, even after the position of the shim plate 100c is adjusted by the second motor 500b and the second 300b, the distance between the shim end 110c and the second die lip 110b is outside the preset tolerance range, an alarm is sounded and the system is inspected, or a human operator can manually adjust the distance between the shim end 110c and the second die lip 110b to be within the preset tolerance. However, the alarm may be adjusted to sound after adjusting the position of the shim plate 100c at least N times, where N is a natural number greater than or equal to 2. For example, the alarm may be set to sound if the distance between the shim end 110c and the second die lip 110b is outside a predetermined tolerance range after adjusting the position of the shim plate 100c five times.

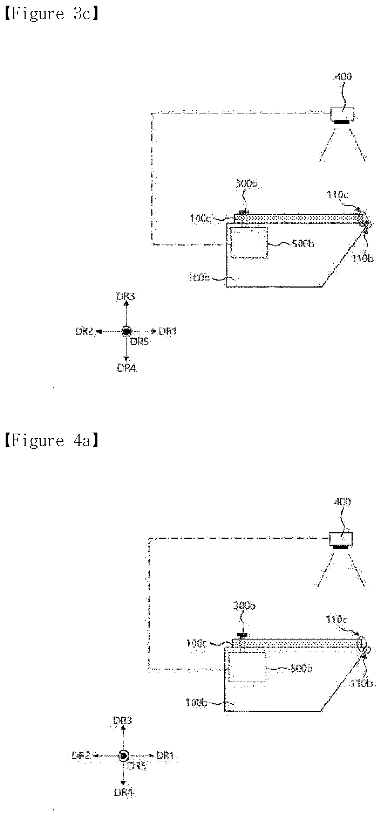

Referring to FIGS. 3b and 3c, when it is determined by the vision system 400 that the distance between the shim end 110c and the second die lip 110b is within the predetermined tolerance range, the second motor 500b can move the second pin 300b in the fourth direction DR4 to secure the shim plate 100c.

Once the shim plate 100c is secured, the first slot die 100a, the shim plate 100c, and the second slot die 100b can be combined to stack in sequence, as shown in the slot die coater 100 of FIG. 1a.

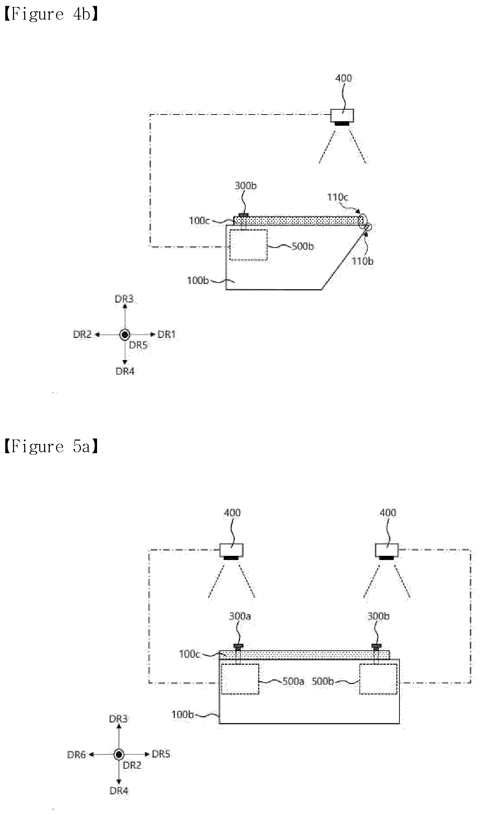

FIGS. 4a and 4b are drawings illustrating an embodiment of adjusting the position of a shim plate included in the slot die coater of FIG. 1a.

Referring to FIGS. 4a and 4b, if it is determined by the vision system 400 that the distance between the shim end 110c and the second die lip 110b is within the predetermined tolerance range, the second motor 500b does not move the second pin 300b in the first direction DR1 or the second direction DR2, but may only move in the fourth direction DR4 to secure the shim plate 100c.

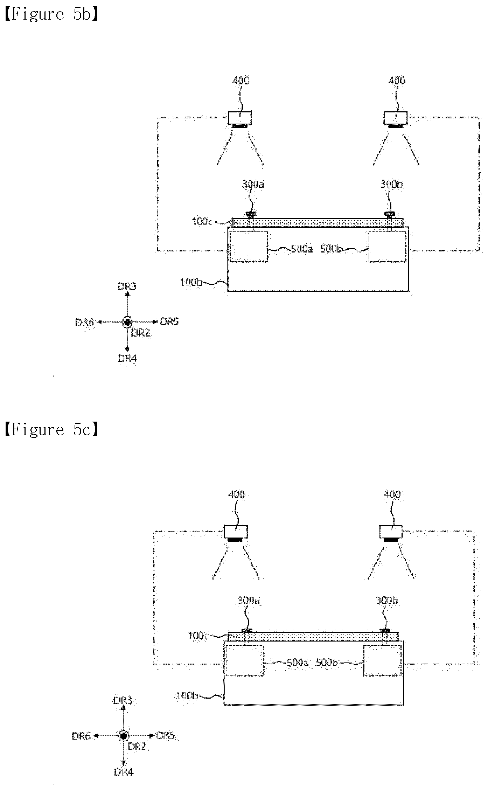

FIGS. 5a through 5c are drawings illustrating an embodiment of adjusting the position of the shim plate included in the slot die coater of FIG. 1a. FIGS. 5a through 5c are drawings illustrating an embodiment in which a motor moves a pin in a fifth direction (DR5) and a sixth direction (DR6).

Referring to FIGS. 5a and 5b, one or more vision systems 400 may be provided. Although only one vision system 400 is shown for the sake of illustration, there may be one or more one vision systems 400 in the present specification. If the distance between the end of the shim plate 100c in the fifth direction DR5 and/or in the sixth direction DR6 and the end of the second slot die 100b in the fifth direction DR5 and/or in the sixth direction DR6 measured by the vision system 400 is outside the predetermined tolerance range, the first motor 500a and the second motor 500b can be moved to adjust the position of the shim plate 100c.

Subsequently, if the vision system 400 confirms that the shim plate 100c is within a targeted tolerance, the first motor 500a and the second motor 500b may move the first pin 300a and the second pin 300b in the fourth direction DR4 to fix the position of the shim plate 100c.

As such, the slot die coater 100 according to an embodiment of the present invention can adjust the position of the shim plate 100c in the first direction DR1, second direction DR2, fifth direction DR5, and sixth direction DR6 to apply the coating solution 220 to have a targeted spread width at a targeted location on the substrate 210.

While the present invention has been described in detail above with respect to preferred embodiments of the present invention, the scope of the present invention is not limited thereto, and various modifications and improvements by those skilled in the art using the basic concepts of the present invention as defined in the following claims are also within the scope of the present invention.

### [Description of Reference signs]

100: slot die coater
100a: first slot die
100b: second slot die
100c: shim plate
110a: first die lip
110b: second die lip
110c: shim end
200: coating roll
210: substrate
220: coating solution
300a, 300b: first and second pins
400: vision system
500a, 500b: first and second motors

## Claims

1. A slot die coater for automatically adjusting a position of a shim plate, comprising:
a slot die;
at least one motor disposed inside the slot die;
the shim plate disposed on the slot die; and
at least one pin which is connected to the motor through the shim plate, wherein the pin is moveable by the motor.

2. The slot die coater of claim 1, wherein the pin is movable in a first direction, which is a direction in which a coating solution is applied, and in a second direction opposite to the first direction.

3. The slot die coater of claim 2, wherein the pin is movable in a third direction, which is a direction in which the pin penetrates the shim plate, and in a fourth direction opposite the third direction.

4. The slot die coater of claim 3, wherein the pin is movable in a fifth direction, which is perpendicular to the first direction and the third direction, and in a sixth direction opposite the fifth direction.

5. The slot die coater of claim 1, wherein the motor adjusts the position of the shim plate by moving the pin when a distance between an end of the shim plate and an end of the slot die measured by a vision system is outside a predetermined tolerance range.

6. The slot die coater of claim 5, wherein the motor is provided in plural and the pin is provided in plural.

7. A method for adjusting a position of a shim plate of a slot die coater, comprising the steps of:
measuring a distance between an end of a slot die and an end of the shim plate disposed on the slot die;
determining whether the distance is within a predetermined tolerance range; and
adjusting a position of the shim plate in accordance with a result of the determination.

8. The method of claim 7, wherein the step of adjusting the position of the shim plate is performed by the pin that penetrates the shim plate and is connected to motor disposed within the slot die.

9. The method of claim 7, further comprising, after the step of adjusting the position of the shim plate, a step of securing the shim plate.

10. The method of claim 9, wherein the step of securing the shim plate is performed by the pin that penetrates the shim plate and is connected to motor disposed within the slot die.

11. The method of claim 7, further comprising, after the step of adjusting the position of the shim plate, a step of re-measuring a distance between the end of the shim plate and the end of the slot die.

12. The method of claim 11, further comprising, after the step of remeasuring, a step of generating an alarm if the distance between the end of the shim plate and the end of the slot die is outside the predetermined tolerance range.
